# EUROPEAN PATENT APPLICATION

(11) **EP 2 412 970 A1**
(43) Date of publication of application: **01.02.2012**
(21) Application number: 10382207.8
(22) Date of filing: 26.07.2010
(51) Int. Cl.: F03D 1/00

(54) **Nacelle for a wind turbine**

(71) Applicant: Alstom Wind, S.L.U., 08005 Barcelona (ES)
(72) Inventor: Valero Lafuente, Sebastian, 08005, Barcelona (ES); Lorita, Jesús, 08005, Barcelona (ES)
(74) Representative: ZBM Patents

(57) **Abstract**

It comprises a main wind turbine frame (10) and at least one housing member (20a, 20b) defining an interior (20) where parts (30a, 30b) of the wind turbine are received. The housing members (20a, 20b) are arranged at a lateral portion of the main frame (10) such that their interior (20) is separated from the main frame (10). The housing members (20a, 20b) comprise releasable hinge means (40) to the main frame (10) allowing the housing member (20a, 20b) to be opened for accessing the interior (20). Limiting means (50) for restricting an opening angular movement of the housing member (20a, 20b) are provided.

## Description

### Field of the invention

The present invention relates to wind turbines, and more particularly to a nacelle for a wind turbine that can be opened for accessing its interior for maintenance operations (repair, replacement, etc.).

The invention further relates to a wind turbine having such a nacelle.

### BACKGROUND ART

Maintenance operations in wind turbines such as replacing or repairing heavy parts in a nacelle, e.g. transformer, electric cabinets etc., are a main concern in wind turbines for wind plant owners as well as for operators. Wind turbine system reliability is a critical factor in the success of a wind energy project and very high costs are involved in such operations due to labor costs primarily arisen from the difficulty of accessing to the nacelle and working properly on the components therein.

When such maintenance operations are to be performed within a nacelle or in areas close to the turbine hub, considerable space is required both for performing such operations properly and for temporarily storing machine parts and tools.

Accessing the nacelle housing is usually difficult and limited due to the nacelle construction itself. A typical nacelle construction in a wind turbine comprises a main frame having a top portion and a bottom portion, a front portion for receiving a rotor hub, an opposite rear portion, and side portions. In known nacelle constructions at least one of said top and bottom portions has an opening formed therein for providing access to the nacelle interior.

One example of such a nacelle construction is disclosed in document EP1882854 showing a nacelle provided with a cover assembly that is removably coupled to the nacelle main frame.

Although this arrangement provides the operators with sufficient headroom, this does not satisfy the need for sufficient floor space in the case of compact engine housings. Large-sized engine housings furthermore involve difficulties in performing maintenance operations on parts close to the hub. In addition, this cover assembly used for closing the main frame opening is not cost-effective since it is mounted in the nacelle but used very few times along wind turbine life. In a wind-power plant with a number of wind turbines each comprising such a nacelle, the extra cost derived from the corresponding cover assemblies is very significant.

W09206295 discloses a wind turbine including a nacelle having sections articulated to a support floor. A hinge connection is provided allowing the sections to be folded outwards and downwards to assume a horizontal position serving as a floor.

This type of hinge connection is permanently mounted in each wind turbine. This has the disadvantage of involving an extra cost for the assembly which may become significant for wind-power plants comprising a large number of wind turbines.

### SUMMARY OF THE INVENTION

The present invention involves an improvement in wind-power plants. The invention particularly refers to a nacelle of a wind turbine as defined in claim 1 having at least one section arranged to be opened for accessing its interior for maintenance operations (repair, replacement, etc).

More particularly, the nacelle according to the invention comprises a main wind turbine frame coupled to a wind turbine tower and at least one nacelle housing member coupled thereto. Two nacelle housing members may be preferably coupled at either lateral portion of the main wind turbine frame.

The housing member of the nacelle according to the invention defines an interior where parts of the wind turbine, for example a generator, are received. As stated above, the housing member is arranged at a lateral portion of the main wind turbine frame. In one embodiment, two housing members may be coupled at either lateral portion of the main wind turbine frame. In this way, the housing member interior is separated from the main wind turbine frame.

The term lateral portion in the turbine frame as used herein means one of the two opposite sides of the main frame of the nacelle other than the top portion (roof portion), the bottom portion (floor portion), the front portion (rotor hub receiving portion) and the rear portion (the one opposite the front portion).

In the embodiment of the invention in which two lateral, opposite nacelle housing members are provided with each arranged at the lateral portion of the turbine frame, the main wind turbine frame is interposed between said two nacelle housing members.

This particular configuration allows the housing members to be reduced in size since they are coupled to the main wind turbine frame for forming the nacelle. This makes possible the housing members to be light and therefore easier to open and close.

The housing member, one or both, where applicable, further comprises coupling means to the frame. Such coupling means are suitable for allowing the nacelle housing member to be opened for accessing the interior and closed for leaving the nacelle ready for use. The opening of the housing member for accessing its interior is such that parts of the turbine received therein can be fitted into and/or removed from the interior vertically. Where more than one housing members is provided, the coupling means thereof may be driven separately in a way that the corresponding housing member can be opened and/or closed independently. However, the invention is not limited to this embodiment and the coupling means may be driven at a time in a way that both housing members can be opened and/or closed together.

The coupling means may comprise hinge means for rotatably operating the nacelle housing member. Such hinge means may be such that the housing member is allowed to be pivoted outwards around an axis.

Yet in some embodiments of the invention, limiting means are provided for restricting an opening angular movement of the housing member. In some embodiments, the angular movement of the housing member is restricted by the limiting means in a way that the lower portion of the housing members is not horizontal when fully opened. Therefore the risk for an operator to step on the inner part of said lower portion of the housing members since both the housing members and the coupling means are usually not designed for withstanding the weight of a person and no handrails are usually provided. Security is therefore increased since the operator can only step on the floor of the nacelle, not only weak areas such as the nacelle housings.

In other embodiments of the invention, locking means may be further provided for preventing the housing of the nacelle from being pivoted.

The nacelle of the invention may further comprise driving means for rotatably driving the housing members relative to the frame. The driving means may comprise, for example, a manually operable driving means either for driving each housing member independently or for driving the housing members at a time. In other embodiments of the invention, the driving means may comprise an electric motor capable of driving the housing members both at a time or independently. One motor for each housing member or a single motor for both housing members may be provided according to the requirements.

The above mentioned coupling means may be releasable coupling means, and more particularly temporary, light weight hinges. Through the use of such coupling means, big parts of the nacelle housing can be opened efficiently and through coupling devices that are used only for maintenance operations (repair, replacement, etc) or the like, avoiding the use of permanent latches or doors. In some embodiments, the releasable coupling means (temporary) may comprise, in addition to temporary hinges placed at the bottom of the frame and a chain or wire rope winch at the upper side thereof for opening/closing. It is to be noted that the releasable coupling means of the invention are only fitted on the nacelle that is going to be used, and not for all the wind turbines in a wind-power plant. Therefore, the overall cost for each wind turbine is reduced and the use of the coupling means is optimized.

The invention further relates to a wind turbine having such a nacelle as defined in claim 9. Said wind turbine comprises at least a transformer to be received within the above described nacelle. In addition, a transformer and electric cabinets may be fitted in the housing members of the nacelle such that they can be pulled out of nacelle for maintenance operations (repair, replacement, etc).

### BRIEF DESCRIPTION OF THE DRAWINGS

A particular embodiment of a wind turbine nacelle according to the present invention will be described in the following, only by way of non-limiting example, with reference to the appended drawings, in which:
Fig. 1 is a perspective part view of a wind turbine nacelle;
Fig. 2 is an elevational part view of the wind turbine nacelle in an upper portion of the tower, a nacelle and blades with rotor are partly shown;
Fig. 3 a fragmentary diagrammatic rear elevational sectional view taken along line 1-1' in Fig. 1 in which the nacelle is shown with the housing members in an open position and the parts therein being pulled out for maintenance operations (repair, replacement, etc); and
Fig. 4 a fragmentary diagrammatic rear elevational sectional view taken along line 1-1' in Fig. 1 in which the nacelle is shown with the housing members in an open position and the driving members are shown during a housing member closing operation.

### DETAILED DESCRIPTION OF PARTICULAR EMBODIMENTS

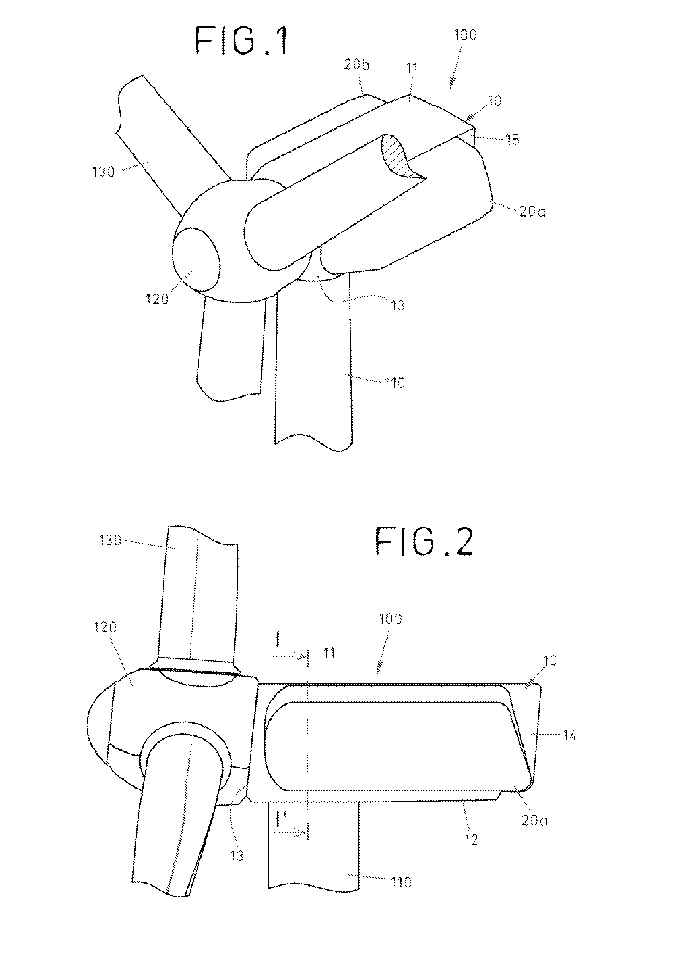

According to the figures 1 to 4, one embodiment of a wind turbine nacelle according to the invention is disclosed and indicated at 100 throughout the drawings. The nacelle 100 is fitted at the upper end of a tower 110 and it is provided with a rotor hub 120 having blades 130, as shown in Fig. 1.

The nacelle 100 comprises a main wind turbine frame 10 having a top portion (roof portion 11), a bottom portion (floor portion 12), a front portion (rotor hub receiving portion 13), a rear portion 14, opposite the front portion 13, and lateral portions 15.

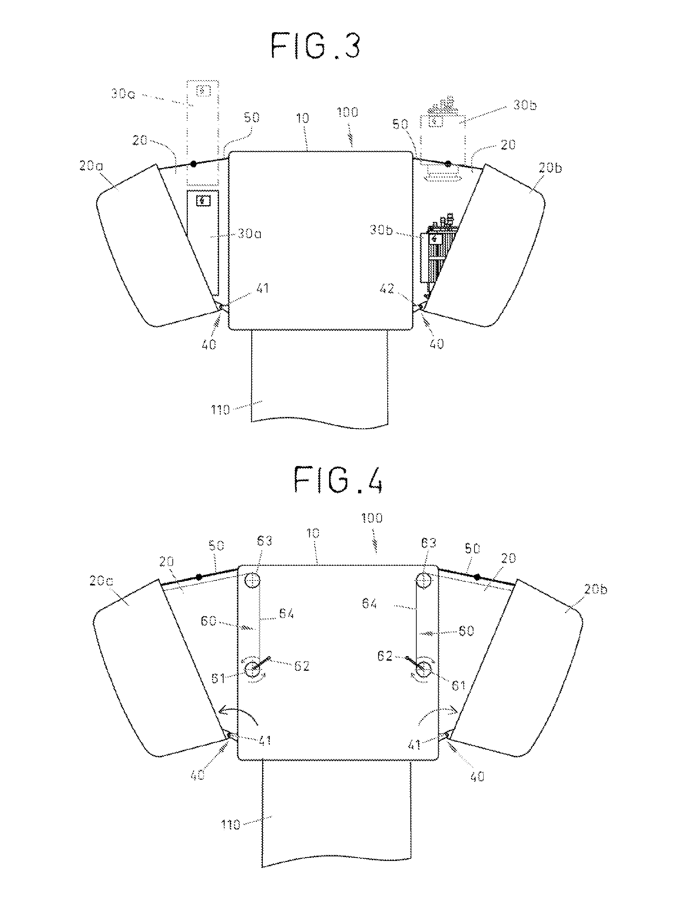

The nacelle 100 further comprises two nacelle housing members 20a, 20b each of which defines, as shown in Fig. 3, an interior 20 where parts 30a, 30b of the wind turbine can be received therein. The parts 30a, 30b of the wind turbine inside the nacelle housing members 20a, 20b may be, for example an electric cabinet 30a, a transformer 30b, etc.

As shown in the figures, the housing members 20a, 20b are arranged at the lateral portion 15 of the turbine main frame 10 such that the interior 20 of each housing member 20a, 20b is separated from the main frame 10.

Coupling means 40 are provided for pivotally coupling the housing members 20a, 20b to the frame, as shown in Figs. 3 and 4. The coupling means 40 are suitable for allowing the nacelle housing members 20a, 20b to be opened outwards (see arrows in Fig. 3) for accessing the respective interior 20 thereof and thus being able to reach the parts 30a, 30b of the wind turbine fitted therein, for example in maintenance operations (repair, replacement, etc).

The coupling means 40 comprise hinge means 41, 42 for rotatably operating the nacelle housing members 20a, 20b. The coupling means 40 are releasable such that they temporary fitted to the nacelle housing members 20a, 20b only for maintenance operations (repair, replacement, etc). The coupling means 40 are fitted at the bottom portion 12 of the main frame 10 and the housing member 20a, 20b.

Cooperating with the coupling means 40, limiting means 50 are provided for restricting the opening angular movement of the housing members 20a, 20b. Locking means (not shown) may be further provided for preventing the nacelle housing members 20a, 20b from being pivoted relative to the main frame 10.

Now referring to Fig. 4, the nacelle 100 includes driving means 60 for rotatably driving the nacelle housing members 20a, 20b relative to the main frame 10. The driving means 60 comprise a manually operable driving means for driving the housing members as shown in Fig. 4, in which two manually operable means 60 are provided capable of acting independently on each nacelle housing member 20a, 20b. Each driving means 60 consist of a respective first driving pulley 61 arranged at half height inside the housing members 20a, 20b. Each driving pulley 61 is provided with a crank handle 62. A second driven pulley 63 is fitted at an upper portion inside the housing members 20a, 20b. A driving chain or wire rope 64 runs from the pulleys 61, 63 such that as the crank handle 62 is operated by the operator, the driving pulley 61 is made to rotate which further makes the driven pulley 63 to be rotated. Since one end of the wire rope 64 is attached to one respective housing member 20a, 20b, said housing member 20a, 20b is made to rotate around the respective hinge means 41, 42 for closing and opening to the main frame 10. Of course, other embodiments could include a single driving means 60 for both nacelle housing member 20a, 20b.

## Claims

1. A nacelle (100) for a wind turbine comprising a main wind turbine frame (10) and at least one nacelle housing member (20a, 20b), the housing member (20a, 20b) defining an interior (20) where parts (30a, 30b) of the wind turbine are received, **characterized in that** the housing member (20a, 20b) is arranged at a lateral portion of the main wind turbine frame (10) in a way that the housing member interior (20) is separated from the main wind turbine frame (10), and **in that** the housing member (20a, 20b) comprises coupling means (40) to the main frame (10) allowing the nacelle housing member (20a, 20b) to be opened for accessing the interior (20).

2. The nacelle (100) as claimed in claim 1, wherein it comprises two lateral, opposite nacelle housing members (20a, 20b) arranged such that, in use, the main wind turbine frame (10) is interposed between said two nacelle housing members (20a, 20b).

3. The nacelle (100) as claimed in claim 1 or 2, wherein said coupling means (40) comprises hinge means (41) for rotatably operating the nacelle housing member (20a, 20b).

4. The nacelle (100) as claimed in claim 3, wherein said hinge means (41) are such that the housing member (20a, 20b) is allowed to be pivoted outwards around an axis.

5. The nacelle (100) as claimed in any of the preceding claims, wherein it further comprises limiting means (50) for restricting an opening angular movement of the housing member (20a, 20b).

6. The nacelle (100) as claimed in any of the preceding claims, wherein it further comprises locking means for preventing the housing member (20a, 20b) from being pivoted.

7. The nacelle (100) as claimed in any of the preceding claims, wherein it further comprises driving means (60) for rotatably driving the housing member (20a, 20b) relative to the main frame (10).

8. The nacelle (100) as claimed in claim 7, wherein the driving means (60) comprise a manually operable driving means for driving the housing member (20a, 20b) relative to the main frame (10).

9. The nacelle (100) as claimed in any of the preceding claims, wherein the coupling means are releasable coupling means (40).

10. Wind turbine comprising a transformer (30b) to be received within a nacelle (100) as claimed in any of the preceding claims.

11. Wind turbine as claimed in claim 10, wherein the coupling means (40) are adapted to allow the nacelle housing member (20a, 20b) to be opened such that the parts of the wind turbine received therein can be fitted into and/or removed from the interior (20) vertically.
